# EUROPÄISCHE PATENTSCHRIFT

(11) **EP 2 297 814 B1**
(45) Veröffentlichungstag und Bekanntmachung des Hinweises auf die Patenterteilung: **12.12.2012**
(21) Anmeldenummer: 09757259.8
(22) Anmeldetag: 02.06.2009
(51) Int. Cl.: H01M 10/50, B60H 1/00, F28F 3/12

(54) **VORRICHTUNG ZUR KÜHLUNG EINER FAHRZEUGBATTERIE**
DEVICE FOR COOLING A VEHICLE BATTERY
DISPOSITIF DE REFROIDISSEMENT D'UNE BATTERIE DE VÉHICULE

(30) Priorität: 06.06.2008 DE 102008027293
(43) Veröffentlichungstag der Anmeldung: 23.03.2011
(73) Patentinhaber: Behr GmbH & Co. KG, 70469 Stuttgart (DE)
(72) Erfinder: HERRMANN, Hans-Georg, 70619 Stuttgart (DE); MOLDOVAN, Florian, 70569 Stuttgart (DE); SCHMID, Caroline, 70186 Stuttgart (DE); SCHIEHLEN, Thomas, 89174 Altheim (DE); ISERMEYER, Tobias, 74245 Löwenstein (DE); STEINBACH, Martin, 71336 Waiblingen (DE); ECKSTEIN, Jürgen, 71409 Schwaikheim (DE); FEHRENBACHER, Christoph, 70597 Stuttgart (DE); WIEBELT, Achim, 71711 Steinheim (DE); KOHLBERGER, Markus, 70174 Stuttgart (DE); PFENDER, Conrad, 74354 Besigheim (DE); HECKENBERGER, Thomas, 70771 Leinfelden-Echterdingen (DE)
(74) Vertreter: Grauel, Andreas
(86) Internationale Anmeldenummer: PCT/EP2009/003916
(87) Internationale Veröffentlichungsnummer: WO 2009/146876

(56) Entgegenhaltungen:
- EP-A- 1 906 126
- WO-A-02/27816
- WO-A-2008/018374
- DE-A1- 10 305 031
- JP-A- 11 213 976
- US-A1- 2007 009 787

## Beschreibung

Die Erfindung betrifft eine Vorrichtung zur Kühlung einer Fahrzeugbatterie nach dem Oberbegriff des Anspruchs 1.

Die Kühlung von elektrischen Energiespeichem von modernen Kraftfahrzeugen stellt besondere Anforderungen aufgrund der teilweise hohen Leistungsdichte. Solche Energiespeicher können unter anderem als Fahrbatterien von Elektro- oder Hybridfahrzeugen eingesetzt werden. Es kann sich um Lithium-Ionen-Batterien, Supercaps, Brennstoffzellen, herkömmliche Akkumulatoren oder Kombinationen aus solchen Elementen handeln. Es sind eine Reihe von Vorschlägen zur effizienten Kühlung solcher Bauteile bekannt, die aber oft nur aufwendig oder kostspielig herstellbar sind. So sind zum Beispiel Kohlplatten für elektrische Elemente vorgeschlagen worden, die aus zwei Hälften zusammengesetzt sind, wobei in einer der Hälften Kanäle zur Führung eines Kühlmittels durch Fräsung eingebracht wurden.

Die WO 2008/018374 A1 und die JP 11 213976 A und die EP 1 906 126 A2 offenbaren eine Vorrichtung zur Kühlung einer Fahrzeugbatterie, umfassend eine Mehrzahl von elektrischen Speicherelementen und einen Kühlkörper mit Kanälen zur Durchströmung mit einem Fluid, wobei die elektrischen Speicherelemente mit dem Kühlkörper in thermischen Kontakt stehen und Wärme der Speicherelemente an das Fluid übertragbar ist, wobei der die Kanäle umfassende Kühlkörper als zumindest ein Strangpressprofil ausgebildet ist.

Es ist die Aufgabe der Erfindung, eine Vorrichtung zur Kühlung einer Fahrzeugbatterie anzugeben, die einfach und kostengünstig herstellbar ist und eine effektive und betriebssichere Kühlung bereitstellt.

Diese Aufgabe wird für eine eingangs genannte Vorrichtung erfindungsgemäß mit den kennzeichnenden Merkmalen des Anspruchs 1 gelost. Dadurch, dass der die Kanäle umfassende Kühlkörper als zumindest ein Strangpressprofil ausgebildet ist, können Kosten bei der Herstellung niedrig gehalten werden, da die Anzahl von Verbindungsstellen und somit der Herstellungsschritte und möglichen Leckagequellen reduziert ist. Zugleich bietet ein Strangpressprofil mit darin vorgesehen Kanälen eine hohe Druckfestigkeit, was insbesondere bei Verwendung des Kühlkörpers als Verdampfer eines Kältekreises vorteilhaft sein kann.

Bei einer vorteilhaften Ausführungsform ist das Fluid ein Kühlmittel eines Kühlkreislaufs. Alternativ oder ergänzend kann das Fluid auch ein Kältemittel eines Kältekreises sein, wobei der Kühlkörper als Verdampfer für das Kältemittel ausgebildet ist. Unter einem Kühlmittel wird nachfolgend ein wärmetragendes Fluid, insbesondere, aber nicht notwendig, in flüssiger Phase, verstanden, das bei Durchströmung des Kühlkörpers im Wesentlichen keinen Phasenwechsel vollzieht. Bei einem Kältemittel im Sinne der erfindungsgemäßen Detailgestaltungen findet im Regelfall eine Verdampfung des Kältemittels in dem Kühlkörper statt, wobei der Kühlkörper Bestandteil eines Kältekreises mit Verdichter, Gaskühler/Kondensator und Expansionsorgan ist. Der Kältekreis kann dabei insbesondere eine Klimaanlage des Fahrzeugs umfassen.

In der erfind ungsgemäßen Ausführungsform ist der Kühlkörper mehrflutig, insbesondere zweiflutig ausgebildet, wobei einige der Kanäle von einem ersten Fluid und andere der Kanäle von einem zweiten Fluid durchströmt werden. Dies ermöglicht zum Beispiel die Anbindung sowohl an einen Kühlkreislauf mit einem ersten Fluid als umlaufendes Kühlmittel als auch an einen Kältekreis mit dem zweiten Fluid als umlaufendes Kältemittel. Hierdurch kann eine Kühlung in unterschiedlichen Betriebssituationen, insbesondere bei ausgeschalteter oder fehlerhafter Klimaanlage des Fahrzeugs, sichergestellt werden.

Vorteilhaft hat das Strangpressprofil im Querschnitt zumindest einen nicht von Kanälen durchzogenen Bereich insbesondere zur Befestigung der elektrischen Elemente. Besonders vorteilhaft kann der nicht von Kanälen durchzogene Bereich des Kühlkörpers dabei einen kleineren Außendurchmesser aufweisen als der von Kanälen durchzogene Bereich. Der dünnere Bereich trägt daher zur Gewichts- und Materialeinsparung bei, wobei er zugleich etwa mittels vorgesehener Bohrungen oder Innengewinde als Befestigung für die elektrischen Elemente bzw. Haltegliedern für die Elemente dienen kann. Insbesondere eine solche Ausführung kann auf einfache Weise so ausgebildet sein, dass der Kühlkörper nur wenige, insbesondere nur genau ein Strangpressprofil aufweist.

Allgemein bevorzugt ist zur Verteilung des Fluids auf die mehreren Kanäle an dem Kühlkörper ein Sammler angeordnet, wobei der Sammler endseitig des Strangpressprofils vorgesehen ist und zumindest einige der Kanäle in dem Sammler münden.

Bei einer möglichen Detailgestaltung hat der Sammler eine in seiner Längsrichtung verlaufende Trennwand, wobei insbesondere durch die Trennwand getrennte Kammern des Sammlers verschiedenen Fluten des Kühlkörpers zugeordnet sind. Ein Sammler mit einer solchen Trennwand kann daher die Verteilung verschiedener Fluide auf verschiedene Gruppen von Kanälen ermöglichen.

Alternativ oder ergänzend kann der Sammler eine in seiner Querrichtung verlaufende Trennwand aufweisen. Eine solche Trennwand ermöglicht auf einfache Weise Anordnungen, bei denen eine ein- oder mehrfache Umlenkung des Fluids an den Enden des Strangpressprofils erfolgt, zum Beispiel im Fall einer mänderförmigen Durchströmung des Küglkörpers.

Zur Sicherstellung einer besonders gleichmäßigen Verteilung des Fluids auf die mehreren Kanäle kann der Sammler einen sich in Strömungsrichtung des Fluids veränderlichen Querschnitt aufweisen. Auf einfache Weise kann dabei der veränderliche Querschnitt durch eine veränderliche Eindringtiefe des Kühlkörpers in den Sammler ausgebildet sein.

Bei einer bevorzugten Detailgestaltung hat der Sammler eine erste Kammer und eine zweite Kammer, wobei die Kammern in Längsrichtung der Strömungskanäle nacheinander angeordnet sind und eine erste Gruppe von Strömungskanälen zur Verbindung mit der ersten Kammer über eine zweite Gruppe von Strömungskanälen, die mit der zweiten Kammer verbunden sind, endseitig hinausragt. Eine solche Bauform ermöglicht insbesondere eine nahezu beliebige Zuordnung der verschiedenen Kanäle zu zwei getrennten Fluten des Kühlkörpers.

Alternativ oder zusätzlich zum Vorsehen eines Sammlers kann an dem Kühlkörper ein Verteilerblock zur Zuführung eines oder mehrerer Fluide angeordnet sein, wobei der Verteilerblock über senkrecht zu zumindest einigen der Kanäle vorgesehenen Durchbrechungen mit den Kanälen verbunden ist. Auch für einen Verteilerblock kann es in einer möglichen Ausführungsform vorgesehen sein, dass dieser zumindest zwei Fluten umfasst.

Bei einer möglichen Ausführungsform der Erfindung umfasst der Kühlkörper mehrere Strangpressprofile, wobei in jedem der Strangpressprofile zumindest ein, insbesondere eine Mehrzahl der Kanäle ausgebildet ist. Hierdurch lassen sich unter anderem durch Verwendung von Gleichteilen Kühlkörper unterschiedlicher Breite realisieren.

Bei einer weiteren Variante der Erfindung ist der Kühlkörper in seinem Verlauf gebogen. Dem kommt die Verwendung von Strangpressprofilen mit darin materialeinheitlich einstückig vorgesehenen Kanälen besonders entgegen, da im Bereich der Biegungen keine Verbindungsstellen beschädigt werden können. Besonders bevorzugt hat der Kühlkörper dabei zumindest eine, insbesondere mehre Umbiegungen um etwa 180°, wobei die elektrischen Speicherelemente zwischen parallelen, ebenen Abschnitten des Kühlkörpers angeordnet sind. Hierdurch ist unter anderem ermöglicht, dass durch die zwei parallelen ebenen Abschnitte zwei gegenüberliegende Seiten eines Speicherelements, zum Beispiel einer flachen Batterie wie etwa bei der Bauform eines "Coffee-Bag", flächig gekühlt sind. Alternativ oder ergänzend kann der Kühlkörper durch seine Biegung auch an eine insbesondere zylindrische Oberflächenform eines Speicherelementes angepasst sein, um die Flächengröße des thermischen Kontakts zu optimieren.

Bei einer weiteren Ausführungsform hat der Kühlkörper ein prismatisches Element mit Wänden zur Aufnahme der elektrischen Speicherelemente. Besonders bevorzugt ist das prismatische Element dabei materialeinheitlich einstückig von dem Strangpressprofil umfasst, also zugleich Bestandteil des Strangpressprofils. Je nach Anforderungen kann es sich aber auch um ein separates, zum Beispiel flächig mit dem Kühlkörper verlötetes Bauteil handeln, das insbesondere im Interesse der einfachen Herstellung ebenfalls ein Strangpressprofil sein kann.

Bei einer möglichen Variante der Erfindung haben die elektrischen Elemente eine nicht eigensteife Hülle, wobei insbesondere die Elemente als flache Körper oder Coffee-Bag-Zellen ausgebildet sind. Solche Bauformen werden insbesondere bei Lithium-Ionen-Batterien verwendet, die aufgrund ihrer Leistungsdichte für moderne Fahrbatterien besonders interessant sind.

Alternativ oder ergänzend haben die elektrischen Elemente eine eigensteife Hülle, wobei insbesondere die Elemente als zylindrische Körper ausgebildet sind. Solche zylindrische Bauformen sind ebenfalls verbreitet und kommen auch bei Lithium-Ionen-Batterien vor.

Im Interesse einer einfachen Montage bei zugleich gutem Wärmekontakt sind die elektrischen Elemente mittels eines Spannrahmens an dem Kühlkörper festgelegt. Vorteilhaft hält der Spannrahmen dabei eines oder mehrere der elektrischen Elemente durch federnde Klemmung. Somit können die Elemente bei einer Montage oder Wartung rastend eingesetzt werden, wobei bei geeigneter Auslegung des Spannrahmens zudem eine resultierende Federkraft in Richtung einer thermischen Kontaktfläche im montierten Zustand vorliegt.

In bevorzugter Detailgestaltung ist der Spannrahmen zweigeteilt ausgebildet ist, wobei ein insbesondere nicht eigensteifes elektrisches Element zwischen zwei Teilen des Spannrahmens gehalten ist. Durch zwei- oder mehrteilige Spannrahmen lassen sich zum Beispiel Coffee-Bag-Zellen einfach und sicher montieren, wobei zugleich eine besonders große Oberfläche der Zellen mit dem thermisch leitenden, insbesondere metallischen Spannrahmen sicher in Anlage ist.

Allgemein vorteilhaft ist es vorgesehen, dass zwei insbesondere nicht eigensteife elektrische Elemente mittels eines zwischen ihnen angeordneten Federlements abgestützt sind, wodurch ein thermischer Kontakt verbessert wird und Dehnungen aufgrund von Temperatur oder Ladungszustand der elektrischen Speicher ausgeglichen werden. Unter einem solchen Federelement ist neben zum Beispiel metallischen Federn aus einem gewellten Blech auch eine Lage aus elastischem Vlies oder Ähnliches zu verstehen.

Bei einer besonders bevorzugten Ausführungsform sind zur Verbesserung der Herstellungsabläufe und im Interesse von Kosten und Qualitätskontrolle mehrere der elektrischen Elemente zu einem vormontierten Stapel verbunden sind, wobei der vormontierte Stapel auf den Kühlkörper aufgebracht wird.

Bei einer allgemein bevorzugten Detailgestaltung sind die elektrischen Elemente flächig an einem mit dem Kühlkörper verbindbaren Kühlblech festgelegt sind. Dies ermöglicht insbesondere die Vormontage der Elemente an dem Kühlblech. Besonders bevorzugt sind dabei die elektrischen Elemente zudem mit einem oder mehreren Kunststoffteilen verbunden sind, wobei die Kühlbleche, die Kunststoffteile und die elektrischen Elemente insgesamt einen vormontierten Stapel zur Verbindung mit dem Kühlkörper ausbilden.

Je nach Anforderungen können die Elemente aber auch unmittelbar auf dem Kühlkörper festgelegt sein, zum Beispiel mittels Verklebung.

Bei einer weiteren Ausführungsform weist der Kühlkörper eine erste Flut und zumindest eine zweite Flut auf, die in einer zu der ersten Flut parallelen Ebene angeordnet ist. Bevorzugt sind dabei die erste und zweite Flut durch einen Umlenkblock miteinander verbunden, so dass Ein- und Austritt auf derselben Seite des Kühlkörpers angeordnet werden können.

Weiter Vorteile und Merkmale der Erfindung ergeben sich aus den nachfolgend beschriebenen Ausführungsbeispielen sowie aus den abhängigen Ansprüche.

Nachfolgend werden mehrere Ausführungsbeispiele der Erfindung beschrieben und anhand der anliegenden Zeichnungen näher erläutert.
- Fig. 1: zeigt einen Kühlkörper eines ersten Ausführungsbeispiels.
- Fig. 2: zeigt den Kühlkörper aus Fig. 1 in einer Schnittansicht.
- Fig. 2a: zeigt eine Abwandlung des Kühlkörpers aus Fig. 2
- Fig. 3: zeigt eine Draufsicht auf den Kühlkörper aus Fig. 1 mit daran angeordneten Sammlern.
- Fig. 4: zeigt eine Abwandlung der Anordnung aus Fig. 3.
- Fig. 5-7: zeigen jeweils weitere Abwandlungen der Anordnung aus Fig. 3.
- Fig. 8: zeigt den Querschnitt eines Kühlkörpers mit zwei Fluten.
- Fig. 9: zeigt den Querschnitt eines weiteren Kühlkörpers mit zwei Fluten.
- Fig. 10: zeigt eine Abwandlung eines Kühlkörpers mit veränderlichem Sammlerquerschnitt.
- Fig. 11: zeigt eine teilweise Schnittansicht des Kühlkörpers aus Fig. 9 mit daran angeordnetem Sammler für zwei Fluten.
- Fig. 12-15: zeigen Gesamt- und Detailansichten eines weiteren Ausführungsbeispiels eines zweiflutigen Kühlkörpers mit daran angeordnetem Sammler.
- Fig. 16: zeigt einen Querschnitt durch einen Kühlkörper mit einem Verteilerblock.
- Fig. 17: zeigt eine Abwandlung der Anordnung aus Fig. 16 mit zweiflutigem Verteilerblock und Kühlkörper.
- Fig. 18: zeigt einen Querschnitt durch einen Kühlkörper mit integrierten Verstärkungen.
- Fig. 19: zeigt einen Kühlkörper mit integriert ausgebildeten Haltewänden zur Halterung elektrischer Elemente.
- Fig. 20: zeigt eine eine Ausführungsform mit biegbaren Kühlkörper nach einem ersten Montageschritt.
- Fig. 21: zeigt die Ausführungsform aus Fig. 20 nach einem zweiten Montageschritt.
- Fig. 22: zeigt eine räumliche Gesamtansicht der Ausführungsform aus Fig. 21.
- Fig. 23: zeigt ein weiteres Ausführungsbeispiel mit einem gebogenen Kühlkörper.
- Fig. 24: zeigt eine Schnittansicht eines mittels eines Spannrahmens am Kühlkörper festgelegten elektrischen Elements.
- Fig. 25: zeigt eine Abwandlung des Ausführungsbeispiels aus Fig. 24.
- Fig. 26: zeigt eine räumliche Ansicht eines Spannrahmenteils für eine flache elektrische Zelle.
- Fig. 27: zeigt eine Draufsicht auf zwei Spannrahmenteile nach Fig. 26
- Fig. 28: zeigt zwei flache elektrische Elemente mit einem zwischen ihnen angeordneten Federelement.
- Fig. 29: zeigt die elektrischen Elemente aus Fig. 28 zwischen Haltewänden eines Profils.
- Fig. 30: zeigt ein an einem Kühlblech festgelegtes flaches elektrisches Element.
- Fig. 31: zeigt die Anordnung aus Fig. 30 mit einem zusätzlichen Kunststoff-Halteglied.
- Fig. 32: zeigt ein weiteres Ausführungsbeispiel mit mehreren Fluten im Kühlkörper.
- Fig. 33: zeigt die Anordnung aus Fig. 32 im Längsschnitt.

Die in den nachfolgend beschriebenen Ausführungsbeispielen gekühlten elektrischen Elemente sind jeweils Lithium-Ionen-Batterien, wobei je nach Anforderungen auch andere Elemente wie etwa NiMH-Akkumulatoren oder Super-Caps vorgesehen sein können.

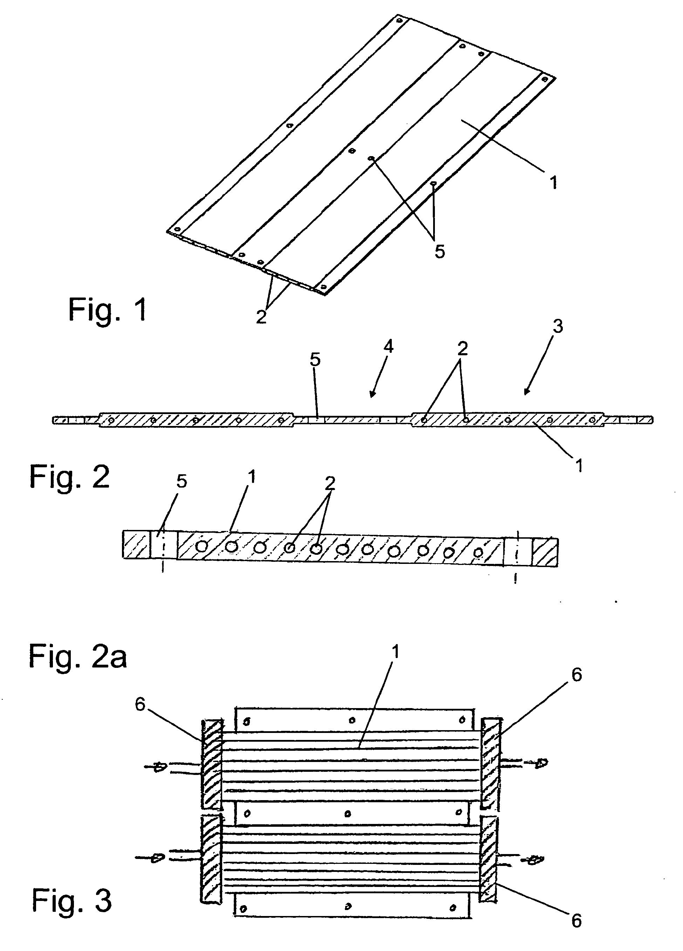

Bei dem ersten Ausführungsbeispiel gemäß Fig. 1 und Fig. 2 ist der Kühlkörper als Aluminium-Strangpressprofil 1 mit einer Mehrzahl von in einer Querrichtung nebeneinander angeordneten Kanälen 2 ausgebildet, die runden, eckigen oder sonstigen Querschnitt aufweisen können. Je eine Gruppe von Kanälen 2 bildet an dem Kühlkörper einen ersten Bereich größerer Dicke 3 aus, wobei zwischen diesen Bereichen 3 zweite Bereiche 4 von zur Gewichtseinsparung geringerer Dicke vorgesehen sind. Die zweiten Bereiche sind mit Bohrungen 5 versehen, mittels derer die nicht dargestellten elektrischen Elemente gegebenenfalls über weitere Halteglieder an dem Kühlkörper festgelegt sind.

Bei der Abwandlung nach Fig. 2a hat das Strangpressprofil 1 eine konstante Dicke, wobei aber auch hier Bereiche 4 ohne Kanäle 2 vorhanden sind, in denen Befestigungsbohrungen 5 eingebracht sind.

Insbesondere sind auf den Kühlkörpern nicht nur in Längsrichtung, sondern auch in Querrichtung mehrere Batteriezellen nebeneinander positionierbar.

Fig. 3 zeigt den Kühlkörper aus Fig. 1 mit daran angeordneten endseitigen Sammlern 6, durch die ein Fluidstrom auf die Kanäle 2 verteilt wird. Vorliegend hat jede der Gruppen von Kanälen in den ersten Bereichen 3 jeweils einen eingangsseitigen und einen ausgangsseitigen Sammler 6.

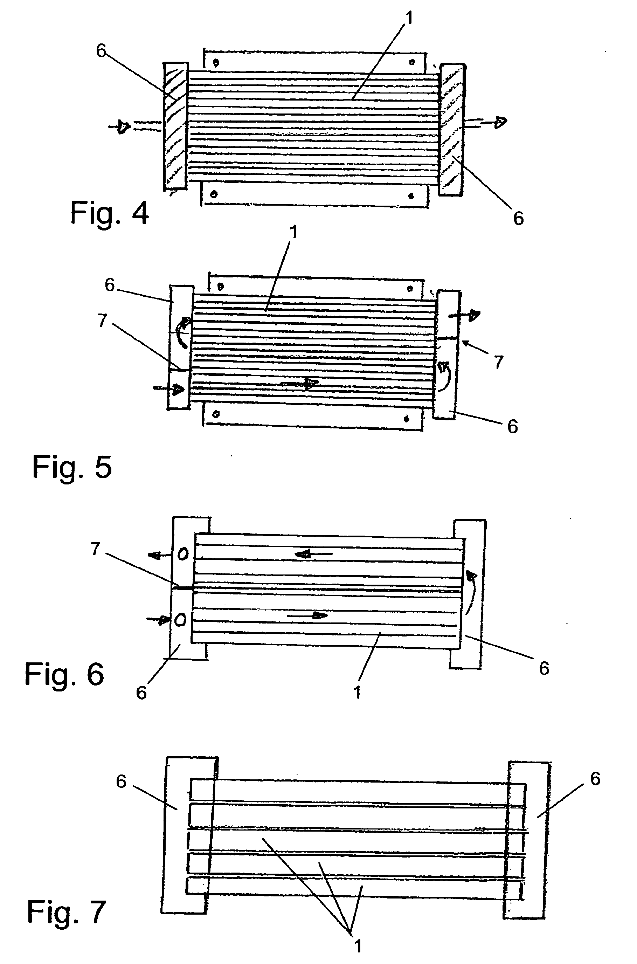

Bei der Abwandlung nach Fig. 4 liegt nur je ein eingangsseitiger und ausgangsseitiger Sammler vor, die jeweils mit sämtlichen Kanälen verbunden sind.

Gemäß Fig. 5 und Fig. 6 können die Sammler in ihrer Querrichtung (gleich der Längsrichtung der Kanäle bzw. der Strangpressrichtung) Trennwände 7 zur Abtrennung verschiedener Kammern oder Teilräume des Sammlers aufweisen. Hierdurch ist eine einfache oder auch mehrfache Umlenkung des Fluidstroms in dem Kühlkörper ermöglicht, so dass dieser als U-flow-Kühler oder auch mit mehrfach mäanderförmigem Strömungsweg ausgebildet sein kann.

Fig. 7 zeigt schematisch ein Beispiel, in dem mehrere separate Strangpressprofile 1 an den gleichen Sammler 6 aufgenommen sind. Hierdurch wird die Formgebung der einzelnen Profilkörper weniger aufwendig und der Kühlkörper kann mit Gleichteilen in verschiedener Breite ausgelegt werden.

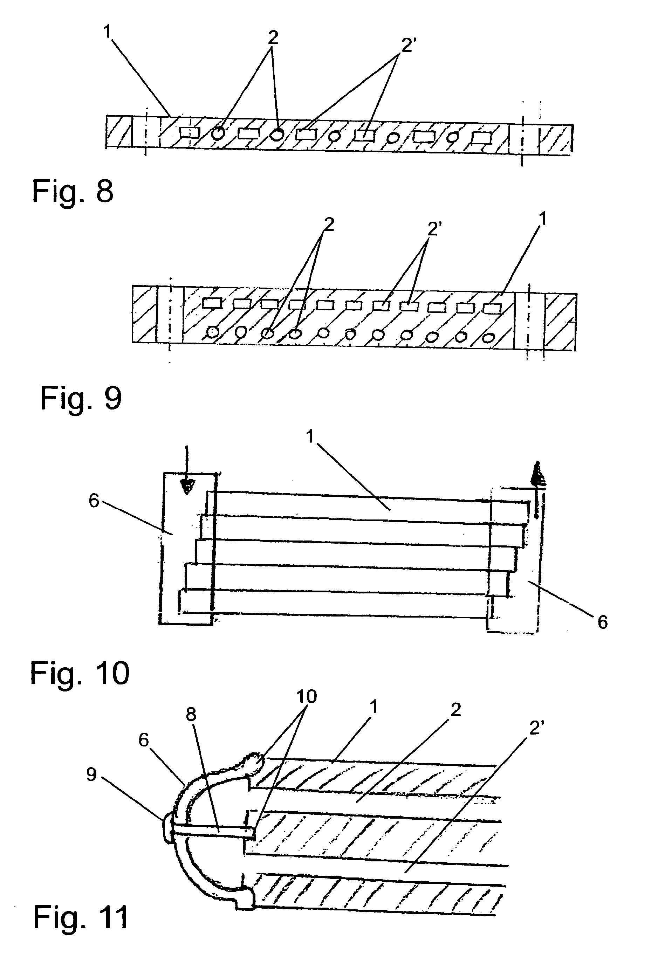

Fig. 8 und Fig. 9 zeigen im Querschnitt Kühlkörper mit Kanälen 2 einer ersten Flut und Kanälen 2' einer zweiten Flut. Im Fall von Fig. 8 sind die Kanalarten 2, 2' abwechselnd nebeneinander angeordnet und im Fall von Fig. 9 in parallelen Reihen untereinander.

Der Kühlkörper kann neben einem Ein-Flut-Design auch wie in Fig. 8 und Fig. 9 als Zwei-Fluten-Design ausgeführt sein. Als ein erstes Fluid kann hier ein Kältemittel wie R134a, CO2, oder jedes andere zugelassene Kältemittel gewählt werden. Die Sammlerbereiche haben entsprechende Trennwände, um die gewünschte Strömungsform zu realisieren. Die Anzahl der Umlenkungen ist dabei insofern nicht frei wählbar, dass der Druckverlust in der Platte zu berücksichtigen ist. Insbesondere wenn die Platte mit Kältemittel durchströmt wird ist darauf zu achten, dass der Druckverlust nicht zu hoch wird. Der Druckverlust bestimmt die Verdampfungstemperatur des Kältemittels. Ein zu hoher Druckverlust hat somit eine Temperatur-Ungleichverteilung in dem Kühlkörper zur Folge. Der Temperaturgradient in dem Kühlkörper sollte nicht höher als 5 °K sein. Das Zwei-Fluten-Design hat den Vorteil, dass die Platte mit Kälte- und Kühlmittel oder zwei anderen unterschiedlichen Fluiden durchströmt werden kann. Dies bringt vor allem dann Vorteile, wenn der Kältemittelkreis im Fahrzeug (Klimaanlage) zum Beispiel wegen zu geringer Außentemperaturen nicht betrieben werden kann, und somit die elektrischen Elemente nicht mit Hilfe des Kältemittels gekühlt werden können. Hier übernimmt dann das Kühlmittel die Kühlung der Elemente.

Die Sammler können allgemein eine beliebige Querschnittsform wie rund, oval, rechteckig oder trapezförmig haben. Zur Montage an dem Kühlkörper sind stirnseitig oder in der Endbereichen der Oberfläche Nuten vorgesehen, in die die Sammler eingesteckt werden. Mittels Lotplattierung zumindest eines der Teile kann die zusammengesteckte Anordnung in einem Lötofen verlötet werden, was natürlich vor einer Montage der elektrischen Elemente erfolgt.

Fig. 11 zeigt beispielhaft einen Sammler, wie der mit einem Kühlkörper nach Fig. 9 kombiniert werden kann. Der Sammler hat zur Trennung der beiden Fluten bzw. Kanalgruppen 2, 2' eine in seiner Längsrichtung durchgängige Trennwand 8, die mittels Durchzügen 9 fixiert und dichten verlötet ist. Zur Montage greifen die Kanten des Sammlers in stirnseitige Nuten 9 des Kühlkörpers 1 ein.

Fig. 10 zeigt ein Ausführungsbeispiel, bei dem die Sammler mittels abgestuft unterschiedlich tief in ihn eingreifendem Kühlkörper einen veränderlichen freien Querschnitt über seine Länge aufweist. Hierdurch kann dem Druckabfall des Fluids über die Länge des Sammlers Rechnung getragen und eine gleichmäßige Fluiddurchströmung des Kühlkörpers 1, der auch aus mehreren einzelnen Strangpressprofilen bestehen kann, sichergestellt werden.

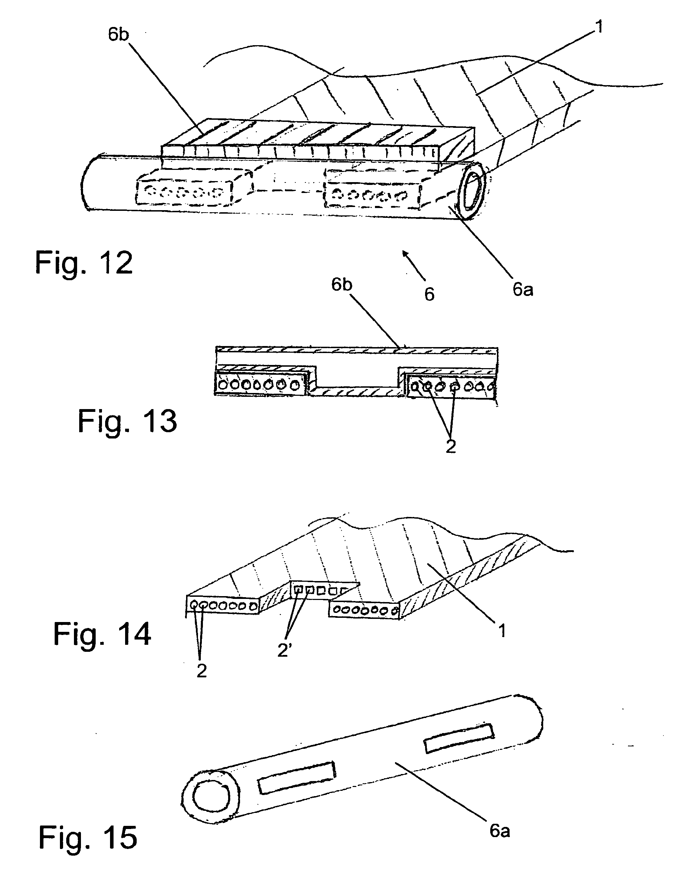

Fig. 12 bis Fig. 15 zeigen ein weiteres Beispiel einer zweiflutigen Vorrichtung, bei der die Kanäle 2, 2' des Kühlkörpers nebeneinander angeordnet sind. Im Endbereich des Kühlkörpers stehen mittels Ablängung jeweils Gruppen der Kanäle der ersten Flut über Gruppen von Kanälen 2' der zweiten Flut in Längsrichtung des Kühlkörpers vor. Der Sammler 6 ist zweiteilig ausgebildet mit einem ersten, rohrartigen Sammlerteil 6a und einem zweiten, angestuft kastenförmigen Sammlerteil 6b. Die ersten Kanäle 2 münden in Schlitze des ersten Sammlerteils 6a und die Kanäle 2' der zweiten Flut münden in den kastenförmigen zweiten Sammlerteil 2b. Die Sammlerteile 6a, 6b sind in der Längsrichtung des Kühlkörpers im Wesentlichen hintereinander angeordnet. In einem Lötprozess werden sämtliche Teile dichtend miteinander verbunden, wobei die fluidführenden Kammern der Sammlerteile 6a, 6b voneinander getrennt sind.

Es versteht sich, dass der Sammler 6 auch als einstückiges Formteil, insbesondere Frästeil, ausgebildet sein kann.

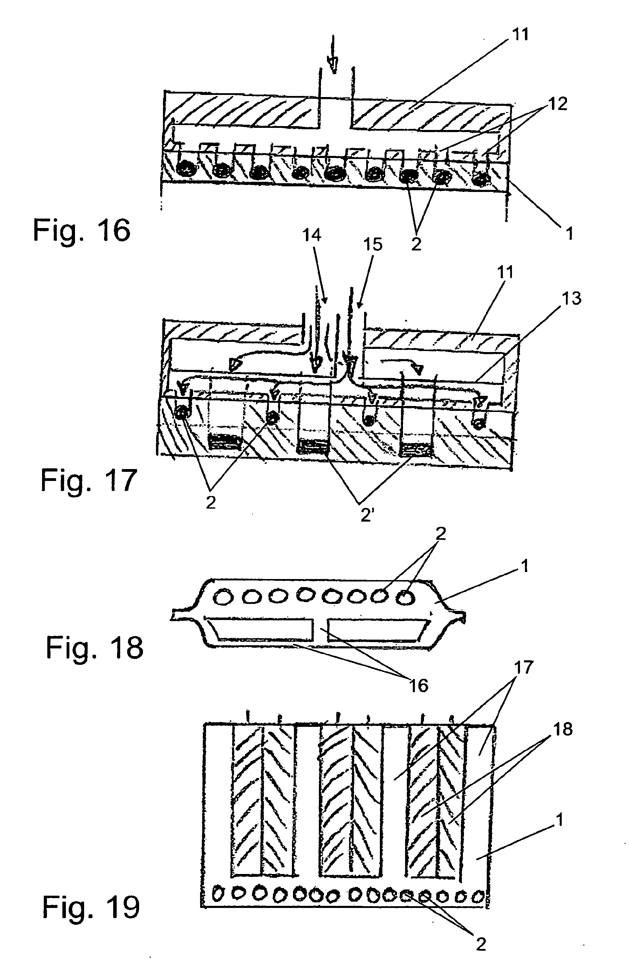

Fig. 16 zeigt einen Verteilerblock 11, der alternativ oder ergänzend zu einem Sammler vorgesehen sein kann und ebenfalls der Verteilung des Fluidstroms auf mehrere Kanäle 2 dient. Der Verteilerblock 11 ist im Endbereich von oben dichtend auf die Oberfläche des Kühlkörpers aufgesetzt. Die Kanäle 2 werden bei dieser Bauart dabei stirnseitig verschlossen und mit senkrechten Stichbohrungen 12 zur Verbindung mit dem Verteilerblock versehen. Dabei können Ansätze des Verteilerblocks zur sicheren Montage in die Bohrungen 12 eingreifen.

Fig. 17 zeigt eine zweiflutige Abwandlung des Verteilerblocks aus Fig. 16. Der Verteilerblock 11 hat dabei eine in Querrichtung verlaufende Trennwand 13 und zwei Zuführungen 14, 15. Durch den Verteilerblock gemäß Fig. 17 können insbesondere Kanäle 2, 2' getrennter Fluten versorgt werden, die abwechselnd nebeneinander angeordnet sind.

Fig. 18 zeigt einen Querschnitt druch ein abgewandeltes Strangpressprofil, bei dem Verstärkungsrippen 16 zur leichtbauenden Verbesserung der mechanischen Steifigkeit des Profils vorgesehen sind.

Fig. 19 zeigt eine Abwandlung eines als Strangpressprofil ausgebildeten Kühlkörpers, bei dem thermisch leitende Wände 17 senkrecht zum Kühlkörper vorragen, zwischen denen die elektrischen Elemente 18 in thermischem Kontakt gehalten sind. Ein solches Profil kann als einstückiges Strangpressprofil ausgebildet sein oder auch aus zwei miteinander verlöteten Strangpressprofilen, von denen eines die Kanäle 2 und das andere die Wände 17 umfasst.

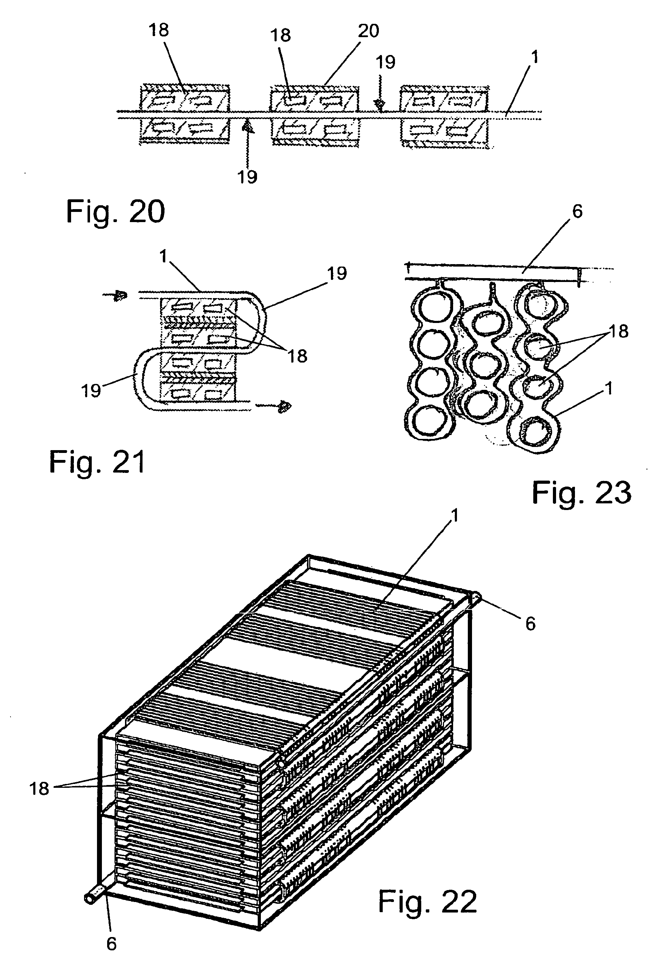

Fig. 20 bis Fig. 22 zeigen eine Vorrichtung mit gebogenem Kühlkörper 1. Der Kühlkörper ist entsprechend dünn ausgelegt, um zunächst die elektrischen Elemente 18 z.B. mittels Verklebung aufzubringen (siehe Fig. 20) und nachfolgend an vorbestimmten Biegestellen 19 um 180° umgebogen zu werden. Durch alternierende Faltung ("Faltkühler") kann so ein kompakter Stapel von elektrischen Elementen 18 aufgebaut werden, die jeweils von beiden Seiten flächig gekühlt werden. In den Figuren gezeigt ist dagegen eine Variante, bei der jeweils zwei Elemente 18 mit einer ihrer flachen Seiten aufeinander zu liegen kommen, so dass jedes der Elemente nur auf einer Seite thermischen Kontakt zum Kühlkörper 1 hat.

Vorliegend sind die elektrischen Elemente flache Lithium-Ionen-Zellen der Bauart von "Coffee-Bags", die keine eigensteife Hülle aufweisen. Um thermische und ladungsbedingte Dehnungen zu kompensieren, sind jeweils Vliesmatten 20 einseitig auf den Elementen angeordnet.

Fig. 22 zeigt eine räumliche Darstellung der fertig montierten und gefalteten Vorrichtung, wobei an den Enden des Strangpressprofils jeweils ein Sammler 6 vorgesehen ist. Insgesamt zeichnet sich diese Bauform durch eine besonders große thermische Kontaktfläche bei zugleich einfacher Herstellung aus.

Fig. 23 zeigt ein weiteres Beispiel für einen gebogenen Kühlkörper, bei dem dieser an gebogene Wandabschnitte von Batteriezellen 18 mit eigensteifer, zylindrischer Wandung angeformt ist.

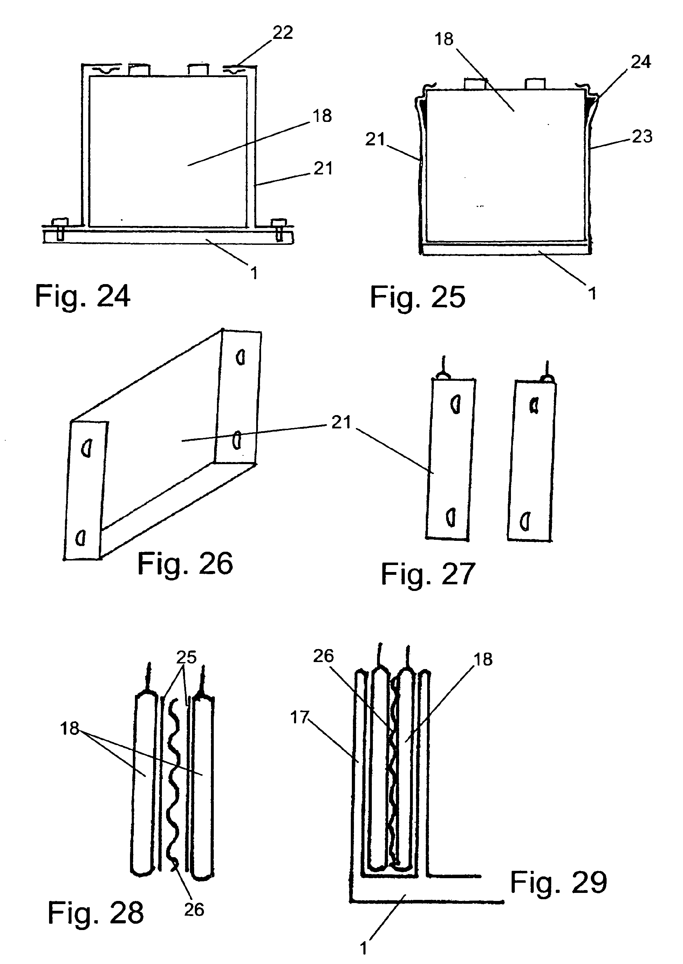

Fig. 24 bis Fig. 31 beschreiben jeweils Halteglieder zur Festlegung und zugleich thermischen Verbindung der elektrischen Elemente 18 an dem Kühlkörper 1.

In Fig. 24 wird das Element mittels eines federnden Spannrahmens 21 aus Metall gehalten, wobei der Spannrahmen mit dem Kühlkörper 1 verschraubt ist und das Element 18 über Federglieder 22 gegen den Kühlkörper gedrückt wird.

Fig. 25 zeigt eine Abwandlung, bei der durch geeignete Formgebung federnder Seitenwände 23 das elektrische Element 18 rastend in den Spannrahmen 21 eingesetzt werden kann, wobei nach Verrastung zudem eine resultierende Andruckkraft in Richtung des Kühlkörpers 1 verbleibt. Die elektrischen Elemente können hierzu geeignete Ausformungen 24 z.B. mit abgeschrägte Kanten aufweisen. Insbesondere können bei dieser Ausführung die Spannrahmen vor Einsetzen der Elemente an dem Kühlkörper angebracht werden, zum Beispiel durch Verlötung.

Fig. 26 und Fig. 27 zeigen Hälften eines thermisch leitenden Spannrahmens 21, zwischen denen insbesondere nicht eigensteife flache Lithium-lonen-Batterien eingesetzt werden können, wonach die Spannrahmen miteinander verrastet und auf den Kühlkörper 1 montiert werden.

Fig. 28 zeigt ein Halteglied, bei dem zwei Coffee-Bag-Zellen mit je einem Metallblech 25 verklebt werden, wobei die Metallbleche zueinander gerichtet sind und zwischen ihnen ein gewelltes Federblech 26 vorgesehen ist. Wie Fig. 29 zeigt, ist eine solche Anordnung insbesondere geeignet, zwischen die Wände 17 des Kühlkörpers aus Fig. 19 klemmend und in gutem thermischen Kontakt eingesetzt zu werden.

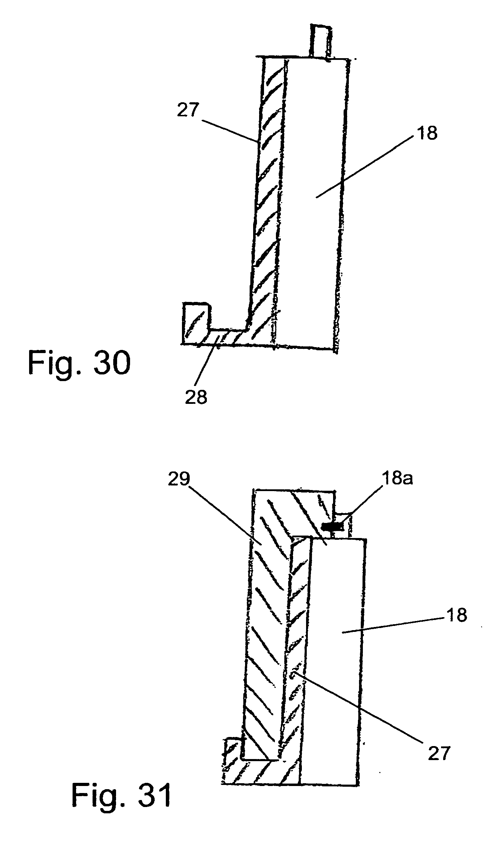

Fig. 30 zeigt ein mit einer Coffee-Bag-Zelle 18 verklebtes Kühlblech 27, das über eine Abwinklung 28 flächig auf den Kühlkörper aufgesetzt werden kann. Die Verbindung kann zum Beispiel mittels Verschraubung erfolgen.

Fig. 31 zeigt Zelle 18 und Kühlblech 27 aus Fig. 30, wobei zusätzlich ein mit Ableitern 18a der Zelle über dort vorgesehene Bohrungen verklipstes Kunststoff-Formteil 29 vorgesehen ist. Die Kunststoff-Formteile 29 können zudem Ausformungen (nicht dargestellt) zur Verklipsung oder Verrastung miteinander und mit den Kühlblechen 27 aufweisen, so dass auf einfache Weise ein vormontierter Stapel aus mehreren elektrischen Elementen gebildet werden kann.

Der Stapel kann dann als Ganzes auf den Kühlkörper aufgebracht werden und zum Beispiel mittels Verschraubung und/oder Verklebung an ihm festgelegt werden. Dies vereinfacht die Serienfertigung einer erfindungsgemäßen Vorrichtung erheblich. Zugleich werden insbesondere bei nicht eigensteifen Zellen 18 die Ableiter in einer definierten Position gehalten.

Es versteht sich, dass die einzelnen Merkmale der vorstehend beschriebenen Ausführungsbeispiele je nach Anforderungen sinnvoll miteinander kombiniert werden können.

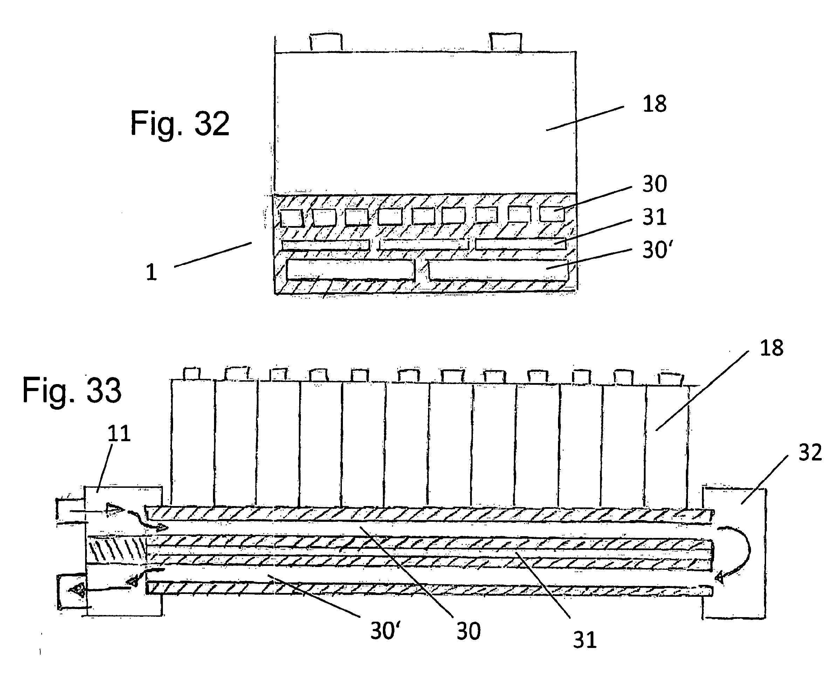

Die Fig. 32 und Fig. 33 zeigen ein weiteres Ausführungsbeispiel der Vorrichtung in einer Frontalansicht und in einem Längsschnitt.

Der Kühlkörper 1 ist in diesem Ausführungsbeispiel ebenfalls als Strangpressprofil ausgebildet und weist eine erste Flut 30 und eine zweite Flut 30' auf, die im Wesentlichen parallel zur ersten Flut angeordnet ist. Das Kühlfluid strömt, wie durch Pfeile angedeutet, in einen Verteilerblock 11 und durch die erste Flut 30. Anschließend wird es in einem Umlenkblock 32 und in einer zweiten Flut 30', die tiefer als die erste Flut angeordnet ist, zum Verteilerblock 11 zurückgeführt.

Hierbei ist im Wesentlichen die erste Flut 30 für die Kühlung der Speicherelemente 18 verantwortlich. Die zweite Flut 30' dient lediglich der Rückführung des Kühlfluids, so dass Ein- und Austritt auf derselben Seite des Kühlkörpers 1 angeordnet werden können. Die zweite Flut 30' hat im Wesentlichen keinen Einfluss auf die Kühlung der Speicherelemente und ist daher derart ausgebildet, dass der Druckverlust möglichst gering gehalten wird.

Zwischen der ersten Flut 30 und der zweiten Flut 30' befindet sich ein Blindkanal 31, der zum Verteilerblock 11 und Umlenkblock 32 keine Verbindung aufweist. Dieser Blindkanal dient der thermischen Isolation der beiden Fluten 30 und 30' und ist beispielsweise mit Luft oder einem anderen isolierenden Material gefüllt.

Der Blindkanal 31 ist optional, denn gegebenenfalls ist diese thermische Trennung zur Vergleichmäßigung der Temperatur des Kühlkörpers nicht erwünscht. In diesem Ausführungsbeispiel übernimmt dann ebenfalls die zweite Flut 30' eine wärmeübertragende Funktion.

Die wesentlichen Vorteile dieser Ausführungsform gemäß der Fig. 32 und Fig. 33 ist es, dass Ein- und Austritt auf einer Seite des Kühlkörpers angeordnet werden können und der Umlenkblock als Gleichteil ausgeführt werden kann. Wenn beispielsweise in einer weiteren Ausführungsform die Vorrichtung aus zwei oder mehreren Strangpressprofilen gefertigt werden soll, so ist jeweils nur der Vertelierblock 11 anzupassen.

## Patentansprüche

1. Vorrichtung zur Kühlung eines Fahrzeugbatterie, umfassend
eine Mehrzahl von elektrischen Speicherelementen (18), und
einen Kühlkörper (1) mit Kanälen (2) zur Durchströmung mit einem Fluid,
wobei die elektrischen Speicherelemente (18) mit dem Kühlkörper (1) in thermischem Kontakt stehen und Wärme der Speicherelemente an das Fluid übertragbar ist, wobei der die Kanäle (2) umfassende Kühlkörper (1) als zumindest ein Strangpressprofil ausgebildet ist, **dadurch gekennzeichnet, dass** der Kühlkörper (1) mehrflutig, insbesondere zweiflutig ausgebildet ist, wobei einige der Kanäle (2) von einem ersten Fluid und andere der Kanäle (2') von einem zweiten Fluid durchströmt werden.

2. Vorrichtung nach Anspruch 1, **dadurch gekennzeichnet, dass** das Strangpressprofil (1) im Querschnitt zumindest einen nicht von Kanälen (2) durchzogenen Bereich (4) insbesondere zur Befestigung der elektrischen Elemente (18) aufweist.

3. Vorrichtung nach einem der vorhergehenden Ansprüche, **dadurch gekennzeichnet, dass** an dem Kühlkörper (1) ein Sammler (6) angeordnet ist, wobei der Sammler (6) endseitig des Strangpressprofils vorgesehen ist und zumindest einige der Kanäle (2) in den Sammler münden.

4. Vorrichtung nach einem der vorhergehenden Ansprüche, **dadurch gekennzeichnet, dass** an dem Kühlkörper (1) ein Verteilerblock (11) zur Zuführung eines oder mehrerer Fluide angeordnet ist, wobei der Verteilerblock (11) über senkrecht zu zumindest einigen der Kanäle vorgesehenen Durchbrechungen (12) mit den Kanälen (2) verbunden ist.

5. Vorrichtung nach Anspruch 4, **dadurch gekennzeichnet, dass** der Verteilerblock (11) zumindest zwei Fluten umfasst.

6. Vorrichtung nach einem der vorhergehenden Ansprüche, **dadurch gekennzeichnet, dass** der Kühlkörper (1) mehrere Strangpressprofile umfasst, wobei in jedem der Strangpressprofile zumindest ein, insbesondere eine Mehrzahl der Kanäle (2) ausgebildet ist.

7. Vorrichtung nach einem der vorhergehenden Ansprüche, **dadurch gekennzeichnet, dass** der Kühlkörper (1) in seinem Verlauf gebogen ist.

8. Vorrichtung nach einem der vorhergehenden Ansprüche, **dadurch gekennzeichnet, dass** der Kühlkörper (1) ein prismatisches Element mit Wänden (17) zur Aufnahme der elektrischen Speicherelemente aufweist.

9. Vorrichtung nach Anspruch 8, **dadurch gekennzeichnet, dass** das prismatische Element materialeinheitlich einstückig mit dem Strangpressprofil ausgebildet ist.

10. Vorrichtung nach einem der vorhergehenden Ansprüche, **dadurch gekennzeichnet, dass** die elektrischen Elemente (18) eine eigensteife Hülle aufweisen, wobei insbesondere die Elemente als zylindrische Körper ausgebildet sind.

11. Vorrichtung nach einem der vorhergehenden Ansprüche, **dadurch gekennzeichnet, dass** zwei insbesondere nicht eigensteife elektrische Elemente (18) mittels eines zwischen ihnen angeordneten Federelements (26) abgestützt sind.

12. Vorrichtung nach einem der vorhergehenden Ansprüche, **dadurch gekennzeichnet, dass** mehrere der elektrischen Elemente (18) zu einem vormontierten Stapel verbunden sind, wobei der vormontierte Stapel auf den Kühlkörper (1) aufgebracht wird.

13. Vorrichtung nach einem der vorhergehenden Ansprüche, **dadurch gekennzeichnet, dass** der Kühlkörper eine erste Flut (30) und zumindest eine zweite Flut (30') umfasst, die in einer zu der ersten Flut parallelen Ebene angeordnet ist.

14. Vorrichtung nach Anspruch 13, **dadurch gekennzeichnet, dass** die erste Flut und die mindestens zweite Flut durch einen Umlenkblock (32) kommunizierend miteinander verbunden sind.

## Claims

1. A device for cooling a vehicle battery, comprising
a plurality of electrical storage elements (18), and
a heat sins (1) having channels (2) for a fluid to flow through,
with the electrical storage elements (18) being in thermal contact with the heat sink (1) and heat bering transferrable from the storage elements to the fluid, with the heat sink (1) which comprises the channels (2) being designed as at least one extruded section, **characterized in that** the heat sink (1) has a multi-pipe design, sand in particular a double-pipe design, with a first fluid flowing through several of the channels (2) and a second fluid flowing through the other channels (2').

2. The device according to claim 1, **characterized in that** the cross-section of the extruded section (1) has at least one legion (4) through which no channels (2) pass, in particular for fastening the electrical elements (18).

3. A device according to any one of preceding claims, **characterized in that** a header (6) is disposed on the heat sink (1), wherein the header (6) is provided at the end of the extruded section and at least some of the channels (2) lead into the header.

4. A device according to any one of the preceding claims, **characterized in that** a distributor block (11) for supplying one or more fluids is arranged on the heat sink (1), wherein the distributor block (11) is connected to the channels (2) by through-holes (12) which are disposed perpendicularly relative to at least some of the channels.

5. The device according to claim 4, **characterized in that** the distributor block (11) has at least two pipes.

6. A device according to many one of the preceding claims, **characterized in that** the heat sink (1) comprises a plurality of extruded sections, wherein at least one channel is, and in particular a plurality of channels (2) are formed in each of the extruded sections.

7. A device according to any one of the preceding claims, **characterized in that** the heat sink (1) is curved.

8. A device according to any one of the preceding claims, **characterized in that** the heat sink (1) comprises a prismatic element heaving wells (17) for accommodating the electrical storage elements.

9. The device according to claim 8, **characterized in that** the prismatic element is designed from the same material as and as one piece with the extruded section.

10. A device according to any one of the preceding claims, **characterized in that** the electrical elements (18) comprise an inherently rigid shell, wherein the elements are designed in particular as cylindrical bodies.

11. A device according to any one of the preceding claims, **characterized in that** two, in particular not inherently rigid, electrical elements (18) are supported by means of a sparing element (26) arranged between them.

12. A device according to any one of the preceding claims, **characterized in that** several of the electrical elements (18) are connected to form a preassembled stack, wherein the preassembled stack is applied to the heat sink (1).

13. A device according to any one of the preceding claims, **characterized in that** the heat sink has a first pipe (30) and at least one second pipe (30') which is arranged in a plane parallel to the first pipe.

14. The device according to claim 13, **characterized in that** the first pipe and the at least one second pipe are connected to each other in a communicating manner by a diverter block (32).

## Revendications

1. Dispositif de refroidissement d'une batterie de véhicule, comprenant; une pluralité d'éléments accumulateurs électriques (18) et un refroidisseur (1) comportant des conduits (2) prévus pour être traversés par un fluide, où les éléments accumulateurs électriques (18) sont en contact thermique avec le refroidisseur (1), et de la chaleur des éléments accumulateurs peut être transmise au fluide, où le refroidisseur (1) comprenant les conduits (2) est configuré comme au moins un profilé extrudé,
**caractérisé en ce que** le refroidisseur (1) est configuré en étant à flux multiples, en particulier à deux flux, où certains conduits (2) sont traversés par un premier fluide, d'autres conduits (2') étant traversés par un deuxième Fluide.

2. Dispositif selon la revendication 1, **caractérisé en ce que** le profilé extrudé (1) présente, en section, au moins une zone (4) non traversée par des conduits (2), ladite zone servant en particulier à la fixation des éléments électriques (18).

3. Dispositif selon l'une ou l'autre des revendications précédentes, **caractérisé en ce qu'**un collecteur (6) est disposé sur le refroidisseur (1), où le collecteur (6) est prévu côté extrémité du profile extrudé, et au moins certains conduits (2) débouchent dans le collecteur.

4. Dispositif selon l'une quelconque des revendications précédentes, **caractérisé en ce qu'**un bloc répartiteur (11) servant à l'alimentation d'un ou de plusieurs fluides est disposé sur le refroidisseur (1), où le bloc répartiteur (11) est raccordé aux conduits (2) par des ouvertures (12) prévues perpendiculairement à au moins certaine conduits.

5. Dispositif selon la revendication 4, **caractérisé en ce que** le bloc répartiteur (11) comprend au moins deux flux.

6. Dispositif selon ligne quelconque des revendications précédentes, **caractérisé en ce que** le refroidisseur (1) comprend plusieurs profilés extrudés, où un conduit, en particulier une pluralité de conduits (2), est configuré(e) dans chacun des profilés extrudés.

7. Dispositif selon l'une quelconque des revendications précédentes, **caractérisé en ce que** le refroidisseur (1) est recourbé dans son profil.

8. Dispositif selon l'une quelconque des revendications précédentes, **caractérisé en ce que** le refroidisseur (1) présenté un élément prismatique comportant des parois (17) servant au logement des éléments accumulateurs électriques.

9. Dispositif selon la revendication 8, **caractérisé en ce que** l'élément prismatique est configuré en formant, du point de vue matériau, une seule et même pièce avec le profilé extrudé.

10. Dispositif selon l'une quelconque des revendications précédentes, **caractérisé en ce que** les éléments électriques (18) présentent une gaine intrinsèquement rigide, où les éléments sont configurés en particulier comme des corps cylindriques.

11. Dispositif selon l'une quelconque des revendications précédentes, **caractérisé en ce que** deux éléments électriques (18), en particulier non intrinsèquement rigides, sont supportés au moyen d'un élément élastique (26) monté sur ressorts et disposé entre ces éléments.

12. Dispositif selon l'une quelconque des revendications précédentes, **caractérisé en ce que** plusieurs éléments électriques (18) sont assemblés pour former une pile prémontée, où la pile prémontée est placée sur le refroidisseur (1).

13. Dispositif selon l'une quelconque des revendications précédentes, **caractérisé en ce que** le refroidisseur comprend un premier flux (30) et au moins un deuxième flux (30') qui est disposé dans un plan parallèle au premier flux.

14. Dispositif selon la revendication 13, **caractérisé en ce que** le premier flux et le deuxième flux au moins au nombre de un sont combinés en communiquant l'un avec l'autre au moyen d'un bloc de retour de flux (32).
